# EUROPEAN PATENT SPECIFICATION

(11) **EP 2 638 936 B1**
(45) Date of publication and mention of the grant of the patent: **05.10.2016**
(21) Application number: 12380012.0
(22) Date of filing: 14.03.2012
(51) Int. Cl.: A63B 21/005

(54) **Device and system for generating electric power for sports training apparatuses**
Vorrichtung und System zur Erzeugung elektrischen Stroms für Sportübungsvorrichtungen
Dispositif et système pour générer de l'énergie électrique pour des appareils d'entraînement sportif

(43) Date of publication of application: 18.09.2013
(73) Proprietor: Ecogim Tecnologias S.L., 20305 Irún Guipuzcoa (ES); Linker System S.L., 20160 Lasarte-Oria Guipuzcoa (ES)
(72) Inventor: Vaquero Gonzales, Carlos, 20305 Irún Guipuzcoa (ES)
(74) Representative: Carvajal y Urquijo, Isabel

(56) References cited:
- DE-U1-202011 103 332
- GB-A- 2 385 803
- US-A1- 2003 073 546
- US-B1- 7 481 749

## Description

### Field of the Invention

The present invention is encompassed within the field of generating electric power by means of sports training apparatuses, and particularly by means of spinning bicycles (indoor cycling).

### State of the Art

The general concept is known as "energy harvesting" which is nothing more than harvesting energy produced by a source and the subsequent use thereof to operate an object.

Use of electric generators associated with stationary bicycles or ergometers is widely known as shown by the fact that code A63B21/005C of the European Patent Classification (ECLA), referring exclusively to apparatuses for performing physical exercises associated with electric generators, has over 300 documents. Among these documents, those disclosing a system using an electric generator integrated in the flywheel similar to that described in this document and/or those which allow harnessing the electric power generated (which in simpler embodiments is simply transformed into heat and not harnessed) must be highlighted.

US 2003/073546 A1 discloses a bicycle trainer includes a resistance unit engageable with the driven wheel of the bicycle, and a control console mounted to the bicycle in a user accessible location. The resistance unit is in the form of an AC alternator which generates power in response to rotation of the bicycle wheel, to power the various components of the bicycle trainer, including the control console and a resistance adjustment arrangement. In one form, the resistance is adjusted in accordance with inputs provided either from an operator or from a computer interconnected with the control console, by selectively connecting a resistor in a circuit including the AC alternator so as to provide resistance to rotation of the rotor of the AC alternator, and thereby resistance to rotation of the bicycle wheel.

In terms of the design of the generator itself, patent document EP 769 311 discloses a flywheel housing therein a synchronous generator with permanent magnets. The wheel includes a central casing containing the generator, a central shaft, a stationary inner part integral with the central shaft comprising the winding of the synchronous generator and an outer rotating ring comprising a series of permanent magnets (12 poles). The device has a single side cover integral with the outer ring, to which a cogwheel is fixed. The pedaling of the user moves the cogwheel which in turn, with the desired multiplication coefficient, drives said flywheel. In terms of the way of harnessing the energy produced, this document discloses isolated sports equipment, which comprises an alternating/direct current converter connected to the output of the generator for converting the electric power produced into direct current (rectifier) and subsequently a regulating module which charges a battery.

Devices of this type which are based on synchronous generators with permanent magnets and an outer rotor are named flywheel magnetos. Although the device described in the patent document US 6093985 is not directly associated with use in stationary bicycles or ergometers, it has a design which is very similar to that above with two side covers integral with the outer rotating ring by means of the fixing elements.

However, the above models have the drawback that they do not allow using these flywheel magnetos in a spinning bicycle without altering the usual operation thereof (performances depending on the effort selected by the user, or which is the same as the selection of the torque, in combination with the pedaling speed).

Although harnessing energy produced by humans in stationary bicycles is a concept which has been studied for more than 30 years, it continues to inspire research and development projects worldwide. There are, therefore for example, reports about practical applications demonstrating the advantages of this concept. This includes the case of a town in Laos where Internet access has been achieved by using a Wi-Fi network and a PC powered by a battery driven by a stationary bicycle. According to the reports, a person pedaling for 1 minute can generate 5 minutes of electricity required for running the PC.

The generators of the company WindstreamPowerSystems Inc. are in turn capable of generating an average continuous power of 125 W if they are activated by pedaling and of 50 W if they are manually activated. The same company manufactures a bicycle-activated module, "TheBikePower Module", with which in principle a person can on average produce 150 W. While it is possible to power certain DC devices such as water pumps, the generator is designed for charging a 12 V battery or for contributing to a battery bank with the same voltage.

In terms of using this concept in an integrated system for harnessing energy from a group of stationary bicycles (for example in a gymnasium), German utility model DE 20 2008 004 354 U1 must be highlighted. This utility model discloses the combination of human mechanical energy generated by several training devices into electric power through the generators for subsequent combination by means of a common electric connection. Said combined electric power can be used for charging a battery or injected into the electric power network through a suitable converter. The document does not detail whether the generator of each sports equipment is direct or alternating current type or the type of specific converters or regulators used.

A document similar to the above, patent document US 4298893, discloses the possibility of connecting electricity-generating sports equipment through a primary alternating current or direct current generator to the electric network or to a battery for harnessing said energy and not losing it in the form of heat. The generator can be an alternating current generator and in that case the current generated for charging batteries is rectified and the electric network is then powered with a DC/AC converter (inverter) thus harnessing the energy produced during exercise.

Although these documents disclose a system for harnessing electric power generated in bicycles, it must be highlighted that they do not disclose the implementation of any control or transformation system for controlling or transforming the output signal of the generators, which allows operating the bicycles according to the conditions demanded by the user (adjustment of pedaling effort/torque, without the need of using a mechanical brake) and also summing up of these signals regardless of the power produced by each of the generators. On the other hand, the absence of an intelligent control system makes the reliability of these circuit diagrams questionable in view of random situations, such as the case that a user stops pedaling or joins the group, or that the system simply cannot respond appropriately in view of generator device or electric network failures, the latter rendering the bicycles unusable.

The first recorded case of a practical application of this concept in gymnasiums is the case of a Hong Kong gymnasium of the Asian gymnasium chain, California [T. Kazazian and A. J. Jansen, "Eco-design and human-powered products", proceedings of the Electronics Goes Green 2004, 6-10 September 2004]. The possibility that the users can recharge their portable electronic equipment such as mobile telephones was originally envisaged, estimating that 10 minutes of activity on a stationary bicycle could produce an average of 2 Wh. According to the creator of this project, a normal person can produce 50 Wh of electric power per hour. Each of these machines is equipped with a generator therein. So what has been done is part of the electricity produced by the machine has been diverted to charge a battery. [http://www.enn.com/lifestyle/article/38050, Blum, People in Hong Kong Gym Generate Electricity While Exercising, Hong Kong, 11 March 2007].

The first initiative of this type in the United States started with The Green Microgym of Portland, Oregon, which began to exploit this concept under the slogan of "green gyms" in September 2008. This sports center adapted some of its apparatuses to electric micro-generators based on the design of motors used in wind power generation. As expected, the users themselves must generate enough electric power to power the sound system of the gymnasium or the DVD players coupled to the exercise machines. The promoters explain that four spinning bicycles (which do not consume electric current for operation) can generate between 200 and 600 Wh of power per hour, naturally depending on the user's pedaling enthusiasm. At the moment continuous belts, one of the apparatuses which work by means of electricity, already cover 30% of their total expenditure with energy from other apparatuses of the gymnasium.

The Ridgefield Fitness Club in Ridgefield, Connecticut has also installed bicycles with a similar technology marketed by a company called The Green Revolution, Inc. Although it is in principle another version of the technology used in Microgym, "The Green Revolution" represents a more novel bid since the energy produced by the users is synchronized and fed directly to the electric network of the sports center. The system is based on a device coupled to the flywheel of the bicycle and is capable of generating an average of between 70-108 watts per bicycle.

### Description of the Invention

The present invention provides an indoor cycling bicycle according to claim 1.

The selection means can comprise a programming console with a display or a manual actuator.

The control means are preferably configured for, depending on an operating mode selected, assigning the electric power either to at least one internal load or to the electric network or an external power storage system.

The power conversion module can be prepared for powering an external power storage system.

The power conversion module can also be prepared for powering an inverter responsible for sending the electric power from the power conversion module to the electric network, synchronizing it in voltage, frequency and phase.

In a preferred embodiment, the power conversion module is configured to allow summing up the direct current outputs of an N number of power conversion modules, when the output of all the N power conversion modules is common thereto, into a single direct current sum input in an inverter, so that it synchronizes with the power supply network and returns the resulting sum power to the network.

Another aspect of the present invention includes a system for generating electric power by means of sports training apparatuses, comprising a plurality of devices for generating the electric power discussed above, the power conversion modules of which are connected in parallel to an inverter responsible for sending the electric power produced therein to the electric network, synchronizing it in voltage, frequency and phase. In another embodiment, the power conversion modules can be connected in parallel powering an external power storage system.

Another aspect of the present invention includes a sports training apparatus comprising any one of the devices for generating electric power discussed above. The sports training apparatus can be any one of the following: stationary bicycle, elliptical bicycle, recumbent bicycles, spinning bicycles, ergometer, treadmill, steppers.

### Brief Description of the Drawings

A series of drawings aiding in better understanding the invention and expressly relating to an embodiment of said invention presented as a non-limiting example thereof is very briefly described below.
Figures 1A and 1 B depict a front section and a side view of the power generating wheel for stationary sports equipment, respectively.
Figure 2 shows a block diagram of the different parts of the control system as well as their interactivity.
Figure 3 depicts a block diagram of the entire generation assembly from the generator to the final inversion system.
Figures 4A and 4B show a schematic depiction of the system for generating power assembled in a spinning bicycle.

### Detailed Description of the invention

The object of the invention consists of a device which allows harnessing, in the form of electric power, the mechanical energy developed by a person exercising on stationary sports equipment (e.g. spinning bicycle). The system is made up of two main modules:
- a generator wheel containing therein a synchronous generator (alternator) with permanent magnets, and
- a control and transformation module responsible for controlling the operation of the generator based on the performances demanded by the user (effort to be made) and transforming the electric power produced into a source of harnessable electricity.

In the case of implementing the invention in a spinning bicycle, as shown in the preferred embodiments, the generator wheel will be a flywheel. However, the invention could also work in other equipment such as elliptical bicycles, in which the wheel does not work as a flywheel since it has virtually no mass.

The design of the generator wheel has been carefully optimized to harness the mechanical energy generated by a person exercising on a spinning bicycle. The result is a device capable of generating electric power even greater than 400W in the range of the pedaling capacity of an average athlete.

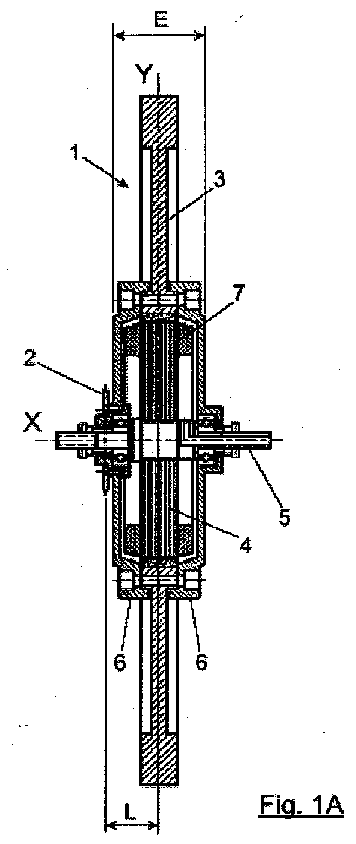

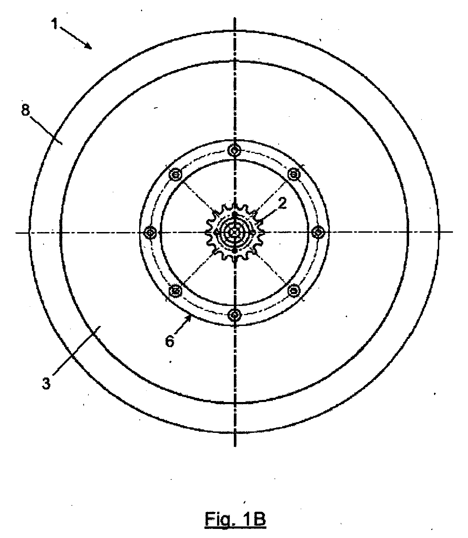

Figures 1A and 1B depict a front section and a side view of the generator wheel, respectively. The generator wheel 1 has a synchronous generator, which comprises:
- a central shaft 5;
- a stationary inner part 4 integral with the central shaft 5 and comprising the winding 7 of the synchronous generator;
- an outer rotating ring 3 comprising a plurality of permanent magnets (preferably up to 132 poles) and, in this particular case, it has an added mass 8 which performs the functions of a flywheel;
- two side covers 6 integral with the outer rotating ring 3 by fixing means;
- two bearings housed in the side covers 6.

The generator wheel also has an outer drive pulley or a pinion 2 fixed by fixing means to of the side covers 6.

The generator wheel has an inner section of constant dimensions containing the alternator itself (universal component), and an outer section in the form of a disc, the dimensions of which can easily be adapted to work as a flywheel (adjustable component). On one hand, the components of the alternator (sizing of the winding in the stator/dimension and position of the magnets in the rotor) have been sized to operate in an average human pedaling frequency range (∼60-120 RPM). On the other hand, the different components coupling it to the bicycle (shaft for coupling to the fork, bearings, pinion, chain, chain cover, etc.) can be adapted so that the assembly can easily be installed in bicycles of different brands and/or sizes.

The generator wheel 1 is designed such that the alternator is in the very centre of the X-Y axes of a flywheel and has a diameter between 2 to 14 times the distance L between the vertical axis of symmetry of the generator wheel 1 and the outer drive pulley 2 and a thickness E (distance between the ends of the side covers 6) between 1 to 3 times L, a three-phase or a single-phase output signal being obtained.

The second main module of the system for generating electric power is the control and transformation module. The alternator generates alternating current the voltage and frequency of which basically depend on the rotation speed thereof, whereas the intensity of the alternating current essentially depends on the torque. The performance of the alternator is not constant for all working conditions, but it also depends on the voltage and intensity being supplied at that time.

A spinning bicycle must in turn be able to work under conditions of variable pedaling speed and effort changing at the will of the user. It is therefore essential that the insertion of the alternator in the flywheel does not affect the normal operation of the spinning bicycle. Basically, actuating the alternator by means of pedaling action entails the fact that the electric power obtained at the output thereof depends basically on three variables:
- effort selected by the athlete (torque),
- pedaling speed of the athlete (rotation speed),
- performance of the alternator itself under different pedaling speed and effort conditions.

In addition, it must be considered that countless pieces of equipment (the minimum being one) can work in a training room or a training session, one or several of them being able to be incorporated or stopped being used at any time.

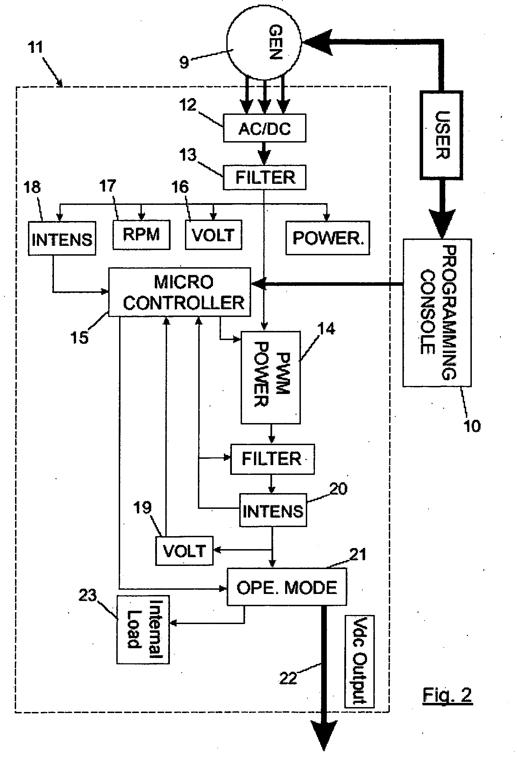

By considering the points discussed above, a control and transformation module or system which allows regulating the load (power) demanded by the alternator depending on the effort to be made by the user and transforming the electric power produced into a controlled electric signal (direct or alternating current) has been designed. The system is preferably The system is preferably made up of two sub-modules shown in Figure 2): programming console 10 and power converter 11.

The programming console 10 preferably consists of a module which will be installed in a place readily accessible for the user such as the handlebar of the bicycle. The console is provided with an interface (e.g. keys, buttons or lever, or a touch screen interface) which are used so that the user can select the level of effort to be made. Alternatively, this interface can be placed in a place readily accessible for the user by means of buttons +/-. The console also has at least one digital display which at least indicates the selected effort and the power which the athlete is developing (resolution ±1W). To that end the console 10 is provided with a microcontroller which is communicated with the power converter 11. Alternatively, the console 10 can indicate other parameters such as heart rate, kilometers covered, etc. The system thus allows replacing this console 10 with a selector such as a rotary switch or a potentiometer, without any digital indication to enable selecting the effort to be made by the user, like standard spinning bicycles.

The power converter 11 is in turn the module which manages the entire power conversion from the output of the alternator 9 of the generator wheel 1 to when said power is sent to a conversion device for converting direct current into alternating current (inverter), for its delivery to the fixed electric network. As observed in the block diagram of Figure 2, this module receives the power in the form of alternating current from the alternator 9, the voltage (alternating voltage) and frequency of which vary with pedaling speed. First it converts the alternating voltage into direct voltage by means of the AC/DC power rectifier 12 and filters it (filter 13). Then, by means of a PWM power converter circuit 14, it converts this unregulated direct voltage into a source of regulated voltage and intensity with a 400 W capacity. To that end, the microcontroller 15 incorporated in the power conversion module 11 analyzes the voltage 16 and intensity 18 from the alternator 9, as well as the output voltage 19 and intensity 20 to the inverter, in addition to reading the rotation speed 17 of the alternator 9 and the effort setting sent by the programming console.

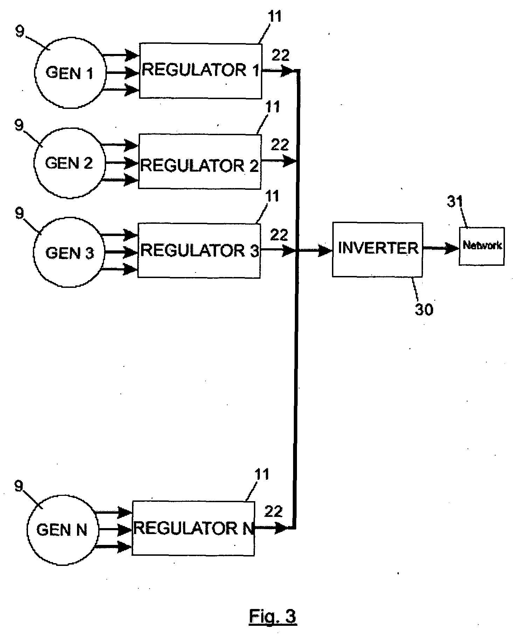

With all this information and the performance parameters of the alternator previously analyzed and saved in tables in the memory of the microcontroller, the power converter 11 instantaneously calculates the current which must be absorbed from the alternator 9 in order to keep the effort selected by the user constant, as well as to allow summing up the direct current outputs of an N number of power conversion modules 11 into a single direct current sum input in the inverter 30. Each power conversion module 11 is responsible for generating the current necessary for obtaining the corresponding power (effort setting), keeping the output voltage constant. All the outputs of the N power conversion modules 11 are therefore at the same voltage and combined with one another, forming a single direct current sum input in the inverter 30 so that it synchronizes with the power supply network and returns the resulting sum power to the network 31, as shown in Figure 3 depicting a block diagram of the entire generation assembly from the generator to the final inversion system, for an N set of control and transformation modules. Therefore, the electric currents produced by N bicycles provided with the generator system can be summed up without the system being affected by the differences of power delivered by each of them or because a user stops pedaling at a specific time. Each power conversion module is responsible for regulating its output current such that the power obtained (V x I) is that calculated by the microcontroller depending on the parameters of the effort setting and pedaling speed entered by the user.

By taking a spinning class as an example, N bicycles could be connected in parallel, where each bicycle could work under several pedaling speed and effort conditions defined by the corresponding user, maximum performance being obtained from each of them at all times. The power generated by each of the bicycles would be added to the rest of the group for obtaining a single sum current of all of them. The power generated by all the bicycles is then sent to the fixed electric network 31, being synchronized in voltage, frequency and phase thereof (single-phase, three-phase) through inverter 30. It is thus assured that, regardless of whether persons participating in a spinning session have limited physical abilities or are elite athletes, the energy generated by all of them is harnessed completely.

The system works in the same manner in the event that storing the power generated by bicycles in traditional systems, such as electric batteries, is considered necessary to subsequently harness the stored energy.

Finally, each bicycle can be used without any electrical connection, such that a small portion of the generated power is used for powering the circuits themselves and the rest is dissipated as heat. The bicycle can thus replace a conventional spinning bicycle, where appropriate, or keep working properly in view of a power supply cutoff.

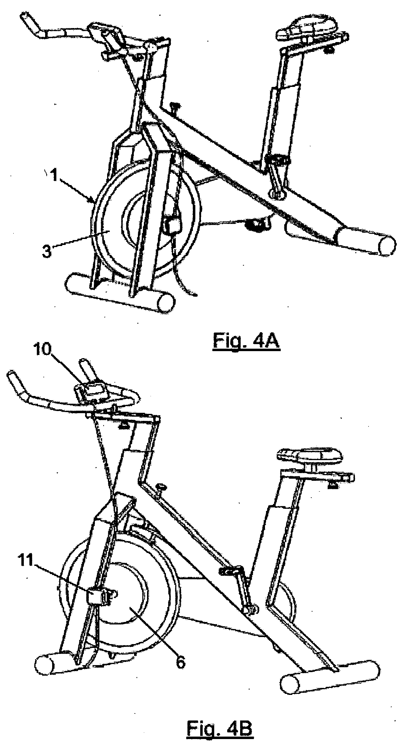

Figures 4A and 4B show a schematic depiction of the power generating system assembled in a spinning bicycle.

The main advantage of the present invention is that there are no precedents of systems of this type which allow incorporating a generator in a spinning bicycle without altering the normal operation thereof (response speed and flexibility in selecting the exercise conditions in terms of effort and pedaling speed).

In addition, the developed system (generator wheel + system for controlling/converting the electric current) entails many essential advantages with respect to the known products:
- The incorporation of the generator in the generator wheel not only has the advantage of allowing the best possible harnessing of the mechanical energy developed by the athlete, but it offers a compact design which is very resistant to the corrosive action of human sweat.
- Besides use in spinning bicycles, the design of the generator wheel can allow the use of this device as a flywheel and brake in equipment of other types, such as ergometers, treadmills or elliptical climbers, all of them with or without a multiplier, being able to reach a revolution range of 1200 RPM.
- Load regulation which is flexible and can be adjusted to user needs, since the effort required for pedaling is proportional to the load (or electric power demanded by the generator), the possibility of making a fine adjustment of the set power value in the range of ± 1W entails an essential condition to customize the user's exercise rhythm. Since this gradual adjustment does not take pedaling difficulty into account, the athlete would need to use a manual brake, whereby not all the mechanical energy generated by the person would be harnessed.

- The implementation complexity is low since the system does not require specific electric installations, but is simply connected to the electric network through any socket existing at that time. Therefore the electric company meter would stop recording the kW produced by the bicycle users and the total consumption of the sports center would drop.
- Since the power generated can be synchronized with the network, the use thereof is completely flexible (not essential for internal consumption), even being able to implement the philosophy followed with other clean energy sources and to sell it to electric network suppliers.
- The flexibility of use of the system in its entirety is very high. Each inverter module 30 is sized for connecting between one and N generators which can each work between the minimum and maximum power.
- In larger facilities groups of N generators are assembled (where N is defined according to the capacity of the inverter module 30) by simply connecting each group to the network. Furthermore, each power conversion module 11 can work both in power generator mode and in traditional mode, such that in the event of a power supply failure or a breakdown in the network or in the inverter 30, the module switches to traditional mode and the power converter 11 consumes the power it generated so that the spinning session is not interrupted. This can be selected by the microcontroller 15 through the operating mode module 21, whereby selecting whether the power generated is assigned as the 22 Vdc output for the electric network or is dissipated in an internal load 23.

## Claims

1. An indoor cycling bicycle, comprising a frame, two pedals, a flywheel (8), driving means for transmitting the energy developed in the pedals to the flywheel (8) and a device for generating electric power, comprising:
- a generator wheel (1) with:
• an inner section comprising a synchronous generator (9) centered with respect to the symmetry axes (X,Y) of the flywheel (8), whereby the symmetry axes (X,Y) are located in the same plane and contain the rotation axis of the flywheel (8), the generator (9) comprising:
- a central shaft (5),
- a stationary inner part (4) integral with the central shaft (5) and comprising the stator winding (7) of the synchronous generator (9),
- an outer rotating ring (3) comprising a plurality of permanent magnets, the flywheel (8) being integral with the outer rotating ring (3); the generator wheel (1) further comprising:
- at least one side cover (6) integral with the outer rotating ring (3) by fixing means;
- a bearing housed in each side cover (6);
- an outer drive pulley or pinion (2) fixed to the at least one side cover (6) and connected with the driving means;
- a control and transformation module having:
• selection means (10) for the user to select a determined resistance torque of the generator;
• a power conversion module (11) responsible for controlling the resistance torque of the generator (9) and converting the power coming out from the generator (9) of the generator wheel (1), comprising:
- an AC/DC rectifier (12) for converting the alternating current of the generator (9) into direct current;
- a power control circuit (14) responsible for regulating the power demanded by the generator (9) and obtaining a controlled voltage and current output;
- control means (15) having a memory for saving data with information relating to the performance of the generator (9) depending on its rotation speed and the power to be developed, said control means (15) being configured for:
• obtaining the selected resistance torque from the selection means (10),
• obtaining the rotation speed of the generator wheel (1),
• controlling the power control circuit (14) to regulate the power demanded by the generator (9) depending on the selected resistance torque, the rotation speed of the generator wheel (1) and the performance of the generator (9) for current working conditions.

2. The indoor cycling bicycle of claim 1, wherein the selection means (10) comprise a programming console with a display.

3. The indoor cycling bicycle of any preceding claim, wherein the control means (15) are configured for, depending on an operating mode selected, assigning the electric power either to at least one internal load (23) or to the electric network (31) or an external power storage system.

4. The indoor cycling bicycle of any preceding claim according to any preceding claim, comprising an inverter (30) for sending the electric power from the power conversion module (11) to the electric network (31), synchronizing it in voltage, frequency and phase.

5. A system for generating electric power comprising a plurality of indoor cycling bicycles according to any of claims 1 to 3, the power conversion modules (11) of which are connected in parallel to an inverter (30) responsible for sending the electric power produced therein to the electric network (31), synchronizing it in voltage, frequency and phase.

6. A system for generating electric power comprising a plurality of indoor cycling bicycles according to any of claims 1 to 3, the power conversion modules (11) of which are connected in parallel powering an external power storage system.

## Patentansprüche

1. Indoor-Fahrrad, umfassend einen Rahmen, zwei Pedale, ein Schwungrad (8), Antriebsmittel zur Übertragung der in den Pedalen entwickelten Energie an das Schwungrad (8) und eine Vorrichtung zur Erzeugung elektrischen Stroms, umfassend:
- ein Geberrad (1) mit:
• einem inneren Teil umfassend einen Synchrongenerator (9), welcher in Bezug auf die Symmetrieachsen (X, Y) des Schwungrads (8) zentriert ist, wodurch sich die Symmetrieachsen (X, Y) in der gleichen Ebene befinden und die Drehachse des Schwungrads (8) beinhalten, wobei der Generator (9) Folgendes umfasst:
- eine Zentralwelle (5),
- ein stationäres Innenteil (4), welches mit der Zentralwelle (5) eine Integraleinheit bildet, und umfassend die Statorwicklung (7) des Synchrongenerators (9),
- einen äußeren rotierenden Ring (3) umfassend eine Vielzahl von Dauermagneten, wobei das Schwungrad (8) mit dem äußeren rotierenden Ring (3) eine Integraleinheit bildet;
wobei das Geberrad (1) zusätzlich Folgendes umfasst:
- mindestens einen Seitendeckel (6), welcher mittels Befestigungsmittel mit dem äußeren rotierenden Ring (3) eine Integraleinheit bildet;
- ein in jedem Seitendeckel aufgenommenes Lager;
- eine äußere Antriebsriemenscheibe oder Ritzel (2), welche/welches an dem mindestens einen Seitendeckel (6) befestigt ist und mit den Antriebsmitteln verbunden ist;
- ein Steuer- und Transformationsmodul mit:
• Auswahlmitteln (10), damit der Benutzer ein bestimmtes Widerstandsmoment des Generators auswählt;
• einem Energieumwandlungsmodul (11), welches für die Steuerung des Widerstandsmoments des Generators (9) und für die Umwandlung der aus dem Generator (9) des Geberrads (1) kommenden Energie verantwortlich ist, umfassend:
- einen AC/DC Gleichrichter (12) für die Umwandlung des Wechselstroms des Generators (9) in Gleichstrom;
- einen Leistungssteuerkreis (14), welcher für die Regulierung der vom Generator (9) erforderten Leistung und für das Erhalten einer kontrollierten Spannung und Stromabgabe verantwortlich ist;
- Steuermittel (15), welche einen Speicher für die Speicherung von Daten mit Auskunft bezüglich der Leistungsfähigkeit des Generators (9) in Abhängigkeit von dessen Rotationsgeschwindigkeit und der zu entwickelnden Leistung aufweisen, wobei die genannten Steuermittel (15) dazu ausgebildet sind:
• das ausgewählte Widerstandsmoment aus den Auswahlmitteln (10) zu erhalten,
• die Rotationsgeschwindigkeit des Geberrads (1) zu erhalten,
• den Leistungssteuerkreis (14) zu steuern, um die vom Generator (9) erforderten Leistung in Abhängigkeit von dem ausgewählten Widerstandsmoment, der Rotationsgeschwindigkeit des Geberrads (1) und der Leistungsfähigkeit des Generators (9) für die aktuellen Betriebszustände, zu regulieren.

2. Indoor-Fahrrad nach Anspruch 1, wobei die Auswahlmitteln (10) eine Programmierkonsole mit einer Anzeige umfassen.

3. Indoor-Fahrrad nach einem der vorhergehenden Ansprüche, wobei die Steuermittel (15) dazu ausgebildet sind, in Abhängigkeit von einem ausgewählten Betriebsmodus, den elektrischen Strom entweder mindestens einer Innenlast (23) oder dem elektrischen Netzwerk (31) oder einem externen Energiespeichersystem zuzuordnen.

4. Indoor-Fahrrad nach einem der vorhergehenden Ansprüche, umfassend einen Wandler (30) für das Senden des elektrischen Stroms vom Energieumwandlungsmodul (11) zum elektrischen Netzwerk (31), unter Synchronisierung dessen Spannung, Frequenz und Phase.

5. System zur Erzeugung elektrischen Stroms umfassend eine Vielzahl von Indoor-Fahrrädern nach einem der Ansprüche 1 bis 3, wobei dessen Energieumwandlungsmodule (11) parallel zu einem Wandler (30) verbunden sind, welcher für das Senden des darin erzeugten elektrischen Stroms zum elektrischen Netzwerk (31) verantwortlich ist, unter Synchronisierung dessen Spannung, Frequenz und Phase.

6. System zur Erzeugung elektrischen Stroms umfassend eine Vielzahl von Indoor-Fahrrädern nach einem der Ansprüche 1 bis 3, wobei dessen Energieumwandlungsmodule (11) parallel verbunden sind, so dass sie ein äußeres Energiespeichersystem mit Energie versorgen.

## Revendications

1. Vélo d'intérieur, comprenant un cadre, deux pédales, un volant d'inertie (8), des moyens d'actionnement pour transmettre l'énergie développée dans les pédales au volant d'inertie (8), et un dispositif pour générer de l'énergie électrique, comprenant
- une roue génératrice (1) avec :
• une section intérieure comprenant un générateur synchrone (9) centré par rapport aux axes de symétrie (X, Y) du volant d'inertie (8), de façon que les axes de symétrie (X, Y) sont situés sur le même plan et contiennent l'axe de rotation du volant d'inertie (8), le générateur comprenant :
- un arbre central (5),
- une partie intérieure stationnaire (4) solidaire de l'arbre central (5) et comprenant l'enroulement du stator (7) du générateur synchrone (9),
- un anneau de rotation extérieur (3) comprenant un pluralité d'aimants permanents, le volant d'inertie (8) étant solidaire de l'anneau de rotation extérieur (3); la roue génératrice (1) comprenant en outre :
- au moins un cache latéral (6) solidaire de l'anneau de rotation extérieur (3) par des moyens d'attache ;
- un palier logé dans chaque cache latéral (6) ;
- une poulie d'entraînement extérieure ou pignon (2) fixé sur l'au moins un cache latéral (6) et relié aux moyens d'actionnement ;
- un module de contrôle et de transformation ayant :
• des moyens de sélection (10) pour que l'utilisateur choisisse un couple de résistance déterminé du générateur ;
• un module de conversion d'énergie (1) responsable du contrôle du couple de résistance du générateur (9) et de la conversion de l'énergie sortant du générateur (9) de la roue génératrice (1) comprenant :
- un redresseur AC/DC (12) pour convertir le courant alternatif du générateur (9) en courant continu ;
- un circuit de contrôle d'énergie (14) responsable de la régulation de l'énergie demandée par le générateur (9) et de l'obtention d'une sortie de tension et de courant contrôlée ;
- des moyens de contrôle (15) ayant une mémoire pour sauvegarder des données avec de l'information concernant la performance du générateur (9) en fonction de sa vitesse de rotation et l'énergie à développer, lesdits moyens de contrôle (15) étant configurés pour :
• obtenir le couple de résistance choisi à partir des moyens de sélection (10) ;
• obtenir la vitesse de rotation de la roue génératrice (1) ;
• contrôler le circuit de contrôle d'énergie (14) pour la régulation de l'énergie demandée par le générateur (9) en fonction du couple de résistance choisi, la vitesse de rotation de la roue génératrice (1) et la performance du générateur (9) pour les conditions de travail actuelles.

2. Vélo d'intérieur selon la revendication 1, dans lequel les moyens de sélection (10) comprennent une console de programmation avec un affichage.

3. Vélo d'intérieur selon l'une quelconque des revendications précédentes, dans lequel les moyens de contrôle (15) sont configurés, en fonction d'un mode de fonctionnement choisi, pour assigner l'énergie électrique soit au moins à une charge interne (23), soit au réseau électrique (31), soit à un système de stockage d'énergie externe.

4. Vélo d'intérieur selon l'une quelconque des revendications précédentes, comprenant un convertisseur (30) pour envoyer l'énergie électrique du module de conversion d'énergie (11) au réseau électrique (31), en la synchronisant en tension, en fréquence et en phase.

5. Système pour générer de l'énergie électrique comprenant une pluralité de vélos d'intérieur selon l'une quelconque des revendications 1 à 3, dont les modules de conversion d'énergie (11) sont reliés en parallèle à un convertisseur (30) responsable d'envoyer l'énergie électrique produite à l'intérieur de ceux-ci au réseau électrique (31), en la synchronisant en tension, en fréquence et en phase.

6. Système pour générer de l'énergie électrique comprenant une pluralité de vélos d'intérieur selon l'une quelconque des revendications 1 à 3, dont les modules de conversion d'énergie (11) sont reliés en parallèle en alimentant un système de stockage d'énergie externe.
